# EUROPEAN PATENT APPLICATION

(11) **EP 0 908 099 A1**
(43) Date of publication of application: **14.04.1999**
(21) Application number: 97202852.6
(22) Date of filing: 16.09.1997
(51) Int. Cl.: A01N 63/00

(54) **Natural insecticide affecting the growth of Heliothis armigera**

(71) Applicant: SOCIETE DES PRODUITS NESTLE S.A., 1800 Vevey (CH)
(72) Inventor: Ortiz, Raphael, 06080 Badajoz (ES)

(57) **Abstract**

The invention is concerned with the use of NPV-Baculoviruses for the eradication of *Heliothis armigera* larvae, and especially with the use of the special virus strain NBIMCC No 3538. The invention has also for object an insecticide composition comprising NPV-Baculoviruses which affect the growth of *Heliothis armigera.*

## Description

The present invention concerns the use of insect diseases as natural insecticide for pest control. This use is of increasing interest for its safe and ecological performance, especially in food directly consumed by humans.

### State of the art

Diseased insects are present in every population. Sometimes, they are rare, in other cases, a standard number of animals is infected without apparent mortality ; and in other cases, microbes cause outbreaks with very important mortality (=epizootics). The diseases participate with other factors in the natural biological reduction of the number of animals and are normally density dependent. The disease, considered as a state in which the body, or a tissue or organ of the body, is disturbed either functionally or structurally or both, may be infectious, that is, caused by a pathogen, or non-infectious, caused by abiotic factors (temperature, starvation, physical injury...).

Most common pathogens causing insect epizootics are fungi, bacteria, protozoa and viruses. All of them are useful, to some extent, in Biological Pest Control. But insect viruses, especially the genus *Baculovirus,* have been identified as having the best potential for microbial pest control, due to their high specificity and lack of undesirable effects (Maramorosch and Sherman, *In* Viral Insecticides for Biological Control, Academic press, p.109, 1985). There are many different types of viruses associated with insects and, more generally, to invertebrates. At present, more than 1100 viruses of invertebrates have been reported, but this number may be the tip of the iceberg, since more than 80 % of the animals are invertebrates and have not been thoroughly studied (Adams, *In* Atlas of Invertebrates viruses, CRC Press, p.87-204, 1991).

Invertebrate viruses are unique. In some virus groups, the virions or nucleocapsids are occluded in a crystalline protein matrix called viral occlusion body. Into these, the family Baculoviridae, members of which are totally restricted to invertebrates, is the most economically interesting for use as biological insecticides. Baculoviruses are rod-shaped (baculo = rod) enveloped viruses containing double-strained DNA, that are normally occluded in protein crystals. The most important types of the genus are Nucleopolyhedrosis virus (NPV) and Granulosis virus (GV), that can be distinguished by the number of viral particles occluded and the shape of the viral occlusion : polyhedral in the NPV, and granular or capsular-shaped in the GV. These viruses are restricted to the Lepidoptera group of insects (Tanada and Hess, In Atlas of invertebrate viruses, CRC Press, 227-257, 1991).

The most common way of entry of Baculoviruses into insect hosts is by ingestion of the virus during feeding of larvae. Once into the insect body, viral occlusion bodies (Obs) are solubilised within minutes, and controlled by the action of the highly alkaline digestive juices (pH 9,5 to 11,5), and possibly by some enzymatic degradation. Primary infection occurs in the gut, and then in a number of cell types, including hemocytes, tracheal cells, and fat body cells. In advanced stages of viral infection, the cells are completely packed with virus particles present in the nucleus. At this moment, the nucleus and the cell rupture, liberating occluded viruses. External aspect of larvae changes during virus infection. They become sluggish, and a reduction in growth results. As the disease progresses, the integument of the larva may assume a colour change and a glossy aspect The integument finally ruptures, and liberates a whitish or greyish-white fluid that contains masses of viral occlusion bodies (PIBs). When healthy larvae feed in a part of the plant that has been contaminated with this fluid, the disease starts again. The spreading of the disease is favoured by the position that many infected larvae take in the plant : they are seen hanging in an inverted V-shaped position from an upper leaf or branch.

*Helicoverpa* species are worldwide aerial pests which especially attack many vegetables such as cauliflower, green bean, tomato, pepper, soya, sweet corn and some other crops like alfalfa, maize, cotton, tobacco. Its larvae can feed on leaves but, as soon as plant fruits are present in the plant, it bores and feeds on them. *Helicoverpa* (*Heliothis*) *zea* larvae are known to be affected by specific NPV-Baculovirus. However, the concentration of NPV-Baculovirus required to kill 50% of larvae is still relatively high (J. Invert. Path., 66, 18-24, 1995)

At present, no NPV-Baculoviruses capable of eradicating especially *Helicoverpa (Heliothis) armigera* larvae has been found to be sufficiently effective so as to be used in a insecticide composition.

### Summary of the invention

The present invention is concerned with the use of NPV-Baculoviruses for the eradication of *Heliothis armigera* larvae, and especially with the use of the special virus strain NBIMCC No 3538.

The invention has also for object an insecticide composition comprising NPV-Baculoviruses which affect the growth of *Heliothis armigera.*

The present invention offers a clear and healthy alternative to the chemical control of a very important tomato fruitworm (*Heliothis armigera*). The efficiency has been shown in bioassays, as well as in field trials, as they act at extremely low concentrations (less than 50 g per Ha in the NPV-*Heliothis*).

### Detailed description of the invention

In the context of the present invention NPV-*Heliothis* designates NPV-Baculoviruses which affect specifically the growth of *Heliothis armigera* larvae, but not the growth of other Lepidopetera species.

The selection of a microbial insecticide against *Heliothis armigera* includes successively a field detection of diseased insects, identification of the causal agent, selection of interesting agents, purification of the agent and effectivity of purificates. Through that method the main causal agent affecting *Heliothis armigera* all around a wide area in Spain (approx. 100 Km distance) was found to be NPV-Baculovirus. This virus was severely affecting the insect population, even the total number of affected larvae was not very high, due to the low density of *H*. *armigera* (one fruit is destroyed by only one larva), avoiding a quick propagating of the disease, and to the high number of chemical insecticides that farmers use in the area, limiting the insect population, as well as the disease propagation.

Among different Baculoviruses found affecting *H*. *armigera* larvae, the most active strain (highest mortality) is the strain NBIMCC No 3538, which has been deposited at the National Bank of Industrial Microoganisms and Cell Culture (NBIMCC), 125 Tsarigradsko chausse blvde, bl. 2, P.O. Box 239, 1113 Sofia, Bulgaria, on August 28^{th}, 1997. This virus is particularly active against *H*. *armigera* larvae of L1-L5 instar, especially on L1-L4 instar, for example (common appellation for specific larvae development stages).

Contrary to a lot of chemical insecticides NPV-*Heliothis* is only toxic against Lepidopter insects and particularly against *Heliothis armigera* larvae (J. of Inv. Path., 66, 18-24, 1995). Surprisingly, the dose necessary to kill the larvae is extremely low in comparison to those necessary for common chemical insecticides, like products commercialized under trademarks Talstar® (FMC), Dipel® (AgrEvo), Novobiobit® (Novo Nordisk), Thuricide® (Sandoz), Delfin® (Sandoz), MVP® (Cyanamid). In addition, the optimum dose to kill about 50% of the larvae depends largely on the instar. Indeed, about 0.7-3×10⁹ PIBs per hectar of NPV-*Heliothis* are sufficient to kill about 50% of the L1-L2 instar (PIB= polyhedrical inclusion bodies), whereas about 0.7-3×10¹⁰ PIBs per hectar of NPV-*Heliothis* are sufficient to kill about 50% of the L3 instar larvae.

Composition containing high quantities of NPV-*Heliothis (>* 3×10⁹ PIBs/g) may be obtained by propagating the virus on a support and purificating the virus from the infected support.

Propagation may be carried out into *Heliothis* cell lines, for instance *Heliothis zea* or *Heliothis armigera* cell lines, or into *Heliothis armigera* larvae according to the method given by R.E. Teakle and J.M. Jensen (*In* Handbook for Insect Rearing Vol.II, Pritam Singh and R.F. Moore Ed., 313-332, 1985). However the easiest and cheapest method for propagating high quantities of NPV-*Heliothis* is the method using larvae culture, since very simple conditions are needed. Once *Heliothis armigera*, larvae or cell lines are infected with the virus, they rapidly die and the virus can be purified.

Purification of the virus may be carried out very simply, for example by co-precipitation with lactose of infected larvae tissues or cell lines according to the method of Dulmage et al. (J. Invertebr. Pathol., 16, 80-83, 1970). NPV-*Heliothis* purificates from infected larvae may yield more than 3×10⁹ PIBs per g, for example 3×10⁹-10¹⁰ PIBs per g. Since, one g of such a purificate is then sufficient to eradicate at least 50% of *Heliothis armigera* larvae in a hectare, it is even more apparent that very low quantities of NPV-*Heliothis* are thus necessary in the context of the present invention.

More specifically, propagation of the virus may be carried out in *Heliothis armigera* L3 instar fed, at about 25°C and 60-70% relative humidity, with an artificial diet contamined with about 100 PIBs/g. This artificial solid diet may comprise of water dry white beans (8.6%), agar (1.25%), wheat germ (6%), yeast extract (5%), L-ascorbic acid (0.3%), Nipagin (0.3%), Sorbic acid (0.1%) and pollens (i.e. bee honey: 1%), for example. Contamination of the diet with NPV-*Heliothis* is preferably effected by impregriating the diet with an NPV-*Heliothis* suspension so as to obtain about 100 PIBs/mm². Larval death happens in 5 to 8 days after infection. Samples of these dead larvae can be taken to the optical microscope (phase contrast x400) to confirm virus presence: a lot of PIBs (polyhedral inclusion bodies) can be seen.

Depending on the NPV concentration applied, insecticide composition can control completely the growth of *Heliothis armigera* larvae. This insecticide preferably contains an effective amount of NPV-*Heliothis* so as to substantially eradicate *Heliothis armigera* larvae. NPV-*Heliothis* may be used as such or preferably in the form of suitable preparations such as wettable powders, granulates, oil spray and emulsifiable concentrates in particular. These preparations are formed by mixing the active substance with additives, such as solid carriers and/or solvents. Advantageously surface active agents, dispersants and emulsifiers are used in addition. Such preparations are, of course, adapted to the purpose and method of application.

It is moreover possible to use this insecticide composition in admixture with fungicides, fertilisers and/or herbicides. Preferably, the insecticide composition comprises at least one other insecticide agent specific to other insects, suitable to a broad range of insects. This agent may be another virus or a chemical agent such as products commercialized under trademarks Talstar® (FMC), Dipel® (AgrEvo), Novobiobit® (Novo Nordisk), Thuricide® (Sandoz), Delfin® (Sandoz), MVP® (Cyanamid), for example.

Optical (fluorescent) brighteners may also be advantageously used (see Dougherty et al., Biological Control 7, 71-74, 1996) for increasing the viral activity by providing protection against UV inactivation. Tinopal CBS-X® (Ciba-Geigy) and Calcofluor White M2R® (Sigma) are compounds particularly adapted to the purpose and method of the present invention.

The present invention is not to be limited in scope by the specific embodiments described herein. Indeed, various modifications of the invention, in addition to those described herein, will become apparent to those skilled in the art from the foregoing description. Such modifications are intended to fall within the scope of the claims. Various publications are cited herein, the disclosures of which are incorporated by reference in their entireties to the extent necessary for understanding the present invention. In the following description, the percentages are given by weight except where otherwise stated.

### Example 1: Bioassays for NPV-Heliothis multiplication

A first group of multiplication bioassays was carried out feeding healthy *Heliothis armigera* larvae with crude larval extracts previously infected with the virus strain NBIMCC No 3538. A second group of multiplication bioassays was carried out feeding healthy *Heliothis armigera* larvae with a purificate of the virus strain NBIMCC No 3538. This purificate was obtained from diseased larvae according to the method of Dulmage *et al.* (1970). This final purificate was a powder containing 3,6 x 10⁹ PIBs (=Polyhedral Inclusion Bodies per gram) that was kept in the refrigerator. With these conditions, the infectivity of the purificate can be maintained for years. Finally, infected larvae were harvested just before death and kept frozen until purification. A sample of these larvae was always checked under a microscope to confirm the cause of death. Results are presented below.

**Table 1**

| N° of larvae | Larval instar | Product | Dose | Mortality obtained |
|---|---|---|---|---|
| 511 | L4 | Crude larval extract 38,5 % | 25 µl/leaflet | 75,1 % |
| 386 | " | Crude larval extract 37,5 % | 25 µl/leaflet | 86,7 % |
| 80 | " | Crude larval extract 38 % | 25 µl/leaflet | 83,3 % |
| 150 | L5 | " | 25 µl/leaflet | 85,4 % |
| 360 | " | Crude larval extract 10 % | 20 µl/leaflet | 47,8 % |
| 110 | L3 | " | 15 µl/leaflet | 95,5 % |
| 440 | L4 | Crude larval extract 50 % | 20 µl/leaflet | 98,8 % |
| 300 | L3 | " | 17 µl/leaflet | 95,0 % |
| 324 | L3-L4 | NBIMCC No 3538 | 8,5 x 10⁶ PIBs/ml * | 97,9 % |
| 394 | L4 | " | 2 x 10⁵ PIBs/ml* | 93,6 % |
| 53 | L5 | " | 2 x 10⁵ PIBs/ml* | 18,9 % |
| 150 | L3 | " | 1,7 x 10⁵ PIBs/ml* | 85,3 % |
| 100 | " | " | 2 x 10⁵ PIBs/ml* | 96,0 % |
| 250 | L4 | NBIMCC No 3538 | 1,5 x 10⁶ PIBs/ml* | 100,0 % |
| 190 | L4 | NBIMCC No 3538+0,1% Tinopal | 1,5 x 10⁶ PIBs/ml* | 100,0 % |

| | | | | |
|---|---|---|---|---|
| * leaflet immersion | | | | |

### Example 2 Bioassays for the determination of the LC₅₀ of NPV-Heliothis

Five bioassays have been done to obtain data on the LC₅₀ (Lethal Dose 50 %) of NPV-*Heliothis* NBIMCC No 3538. Four of them were carried out with first larval instars (L1-L2), as the pest has to be controlled in its smaller size, to get maximum effectiveness with the minimum expense of insecticide and minimum damage to the crop. Another trial was done with the L3 Instar.

In these bioassays, the virus purificate NBIMCC No 3538 (3,6 x 10⁹ PIBs/g) was diluted in water plus a standard wetting agent (Agral). The virus solution was spread onto alfalfa leaves and offered to the larvae during a maximum time of 48 hours. Larvae, that did not eat the total amount of the leaves in that period, were discarded.

Results show that the two first trials carried out with L1-L2 instars give homogeneous results which means that LC₅₀ is between 2000 and 8000 PIBs/ml. This is equivalent to a dose of NBIMCC No 3538 purificate of 0.22 to 0.88 g per hectare.

Trials with L1 instar (neonate larvae) however presents heterogeneous mortality. This could be explained by the method followed with these very small larvae. The consumption of alfalfa leaflet, in which was spread the virus concentration, was very low, and some remains of uneaten leaves remained, mainly in their nervures.

In the bioassays with L3 larvae, the mortality was too high in all the doses, showing that less concentrated viral solutions had to be used. LC₅₀ has to be much lower than the first dose of 25500 PIBs/ml (equivalent to 2.8 g per hectare of our purificate NBIMCC No 3538).

### Example 3 Field persistence of NPV-Heliothis purificate

Tomao plants were sprayed with a suspension of another NBIMCC No 3538 virus purificate (4.6x10⁹PIBs/g: see example 1) at a dose of 0.049 g/l and, to prevent its rapid degradation, a mixture of activated charcoal (1 %) and yeast extract (0.5 %) was added as sun protectant. Leaf samples were taken at 0, 2 and 4 days, and tested in the laboratory, feeding L1 larvae with these leaves (80 larvae per sample). Virus persistence was recorded as larval mortality, in comparison with larvae feed and non-treated tomato leaves. Results show that the persistence of a purified virus is relatively short, due to its degradation by Ultraviolet Light, if no sun protectant is added.

### Example 4: Field activity of NPV-Heliothis in comparison with chemical (pyrethroid group) and Bacillus thuringiensis pesticides

This trial was planned in order to study the efficacy of a NPV-*Heliothis* purificate (4.6×10⁹PIBs/g: see example 1) in front of a very active chemical insecticide (Bifentrin : pyrethroid group), and five commercial formulations of *Bacillus thuringiensis* (bacterial organism : biological insecticide).

The trial was carried out on a farm, in a late tomato crop sowing, to provoke a high natural pest pressure. Tillage, fertilisation and general cultivation techniques were according to the standard in the area. The experimental design was complete randomised blocks, with four replicated plots of 74,25 m² (16,5 x 4,5 m) per treatment. The insecticides and doses sprayed in the trials are presented in table 3.

| Table 3 | | | | |
|---|---|---|---|---|
| Products | Active Ingredient | Manufacturer | Spraying concentration | Dose per hectare |
| TALSTAR | 10 % Bifentrin | FMC | 0,4 cc/l | 320 cc |
| DIPEL 2X | B.t.* | AgrEvo | 0,5 g/l | 400 g |
| NOVOBIOBIT | B.t.* | Novo Nordisk | 1,5 g/l | 1200 g |
| THURICIDE | B.t.* | Sandoz | 1,5 g/l | 1200 g |
| DELFIN | B.t* | Sandoz | 0,75 g/l | 600 g |
| MVP | B.t* | Cyanamid | 4 cc/l | 4000 cc |
| NBIMCC No 3538 | NVP-*Heliothis* | Nestlé | 0,049 g/l | 39 g |

| | | | | |
|---|---|---|---|---|
| **Bacillus thuringiensis* var. Kurstaki | | | | |

The chemical insecticide Talstar and the different formulations of *Bacillus thuringiensis* were directly obtained from their manufacturing companies. The purificate of strain NBIMCC No 3538 contained 4,6 x 10⁹ PIBs/g, to which a mixture of yeast extract (0,5 %) and activated charcoal (1 %) were added to prevent its rapid degradation.

Results summarised in table 4 show, on damaged red fruits, a high mortality with the chemical insecticide TALSTAR, clearly different from the majority of the other plots. This is logical, if its double activity both by ingestion and by contact, and its long lasting action are taken into account. The *Bacillus thuringiensis* products have shown similar activity among them, although THURIDICE seems to have a better performance. Surprisingly, the viral product has a similar activity to *Bacillus thuringiensis* products, which means that the low dose used for the viral product (30 g par hec.) has a similar effect as formulations prepared by pesticide companies clearly containing significantly higher doses of active principle.

The study of damaged green fruits shows similar differences, but in this case, the viral product gave less mortality, probably due to its degradation (lack of UV protectant).

**Table 4**

| | Yield | Damaged fruits by *Heliothis armigera* | |
|---|---|---|---|
| Products | Kg/Ha | Red fruits (% in number) | Green fruits (% in number) |
| TALSTAR | 97500 | 1,1 | 0,3 |
| DIPEL 2X | 87700 | 5,0 | 1,4 |
| NOVOBIOBIT | 97600 | 5,4 | 1,3 |
| THURICIDE | 78700 | 3,7 | 0,7 |
| DELFIN | 86200 | 4,3 | 0,8 |
| MVP | 84900 | 5,5 | 0,9 |
| NBIMCC No 3538 | 86700 | 4,3 | 2,0 |
| UNTREATED | 82600 | 8,3 | 3,2 |

### Example 5 Trials to enhance the activity of NPV-Heliothis

The aim of this group of bioassays was to increase the direct activity of the NPV-Heliothis (percentage of mortality), as well as to decrease the time necessary to achieve mortality (LT₅₀).

A first trial using optical brightener 0.1% Tinopal CBS-X® was carried out in L3 larvae, feeding them with an exact amount of virus (200 PIBs/larvae) onto an alfalfa leaf disc of 4 mm in diameter. Results show that an increase mortality effect is obtained when NPV-*Heliothis* is combined with an optical brightener.

A second trial using low amounts of a chemical insecticides was focused on pyrethroid, organophosphorous and carbamate insecticides at 1% and 10 % of their standard doses in admixture with NPV-*Heliothis*. Assays were carried out feeding L3 instar *Heliothis* larvae in alfalfa leaves. For each treatment, 5 larvae and four replications were used. Results show also that an increase mortality effect.

## Claims

1. The use of NPV-Baculoviruses for the eradication of *Heliothis armigera* larvae

2. The use according to claim 1 of the NPV-Baculovirus strain NBIMCC No 3538.

3. An insecticide composition comprising NPV-Baculoviruses which affects the growth of *Heliothis armigera.*

4. An insecticide composition comprising the NPV-Baculovirus strain NBIMCC No 3538.

5. The NPV-Baculovirus strain NBIMCC No 3538.
